# EUROPEAN PATENT APPLICATION

(11) **EP 4 458 675 A1**
(43) Date of publication of application: **06.11.2024**
(21) Application number: 24173337.7
(22) Date of filing: 30.04.2024
(51) Int. Cl.: B64D 15/12, F02C 7/047, B64D 33/02

(54) **SEGMENTED NACELLE INLET LIP WITH ELECTRIC THERMAL ANTI-ICING SYSTEM**

(30) Priority: 01.05.2023 US 202318141820
(71) Applicant: Rohr, Inc., Chula Vista, CA 91910-2098 (US)
(72) Inventor: SHERMAN, Brian A., Chula Vista, 91910 (US)
(74) Representative: Dehns

(57) **Abstract**

An assembly (54) for an aircraft propulsion system (20) includes a first lip segment (92) and a second lip segment (92). The first lip segment (92) includes a first lip skin (96), a first mount (98A) and a first electric heater (100). The first mount (98A) is disposed at a first side (94A) of the first lip segment (92) and connected to the first lip skin (96). The first electric heater (100) is disposed at the first side (94A) of the first lip segment (92) and integrated with the first lip skin (96). The second lip segment (92) includes a second lip skin (96), a second mount (98B) and a second electric heater (100). The second mount (98B) is disposed at a second side (94B) of the second lip segment (92) and connected to the second lip skin (96). The second mount (98B) is removably attached to the first mount (98A). The second electric heater (100) is disposed at the second side (94B) of the second lip segment (92) and integrated with the second lip skin (96).

## Description

### BACKGROUND

### 1. Technical Field

This disclosure relates generally to an aircraft propulsion system and, more particularly, to an electric thermal anti-icing system for the aircraft propulsion system.

### 2. Background Information

A nacelle for an aircraft propulsion system may include an electric thermal anti-icing system for reducing / preventing ice accumulation on an inlet lip of the nacelle. Various types and configurations of anti-icing systems as well as inlet lips are known in the art. While these known anti-icing systems and inlet lips have various benefit, there is still room in the art for improvement.

### SUMMARY OF THE DISCLOSURE

According to an aspect of the present disclosure, an assembly is provided for an aircraft propulsion system. This assembly includes a nacelle inlet lip. The nacelle inlet lip includes a first lip segment and a second lip segment. The first lip segment includes a first polymeric material, a first lip skin, a first mount and a first electric heater. The first lip skin extends circumferentially in a first direction about an axis to a first side of the first lip segment. The first mount is disposed at the first side of the first lip segment and is connected to the first lip skin. The first electric heater is disposed at the first side of the first lip segment and integrated with the first lip skin. The second lip segment includes a second polymeric material, a second lip skin, a second mount and a second electric heater. The second lip skin extends circumferentially in a second direction about the axis to a second side of the second lip segment. The second mount is disposed at the second side of the second lip segment and is connected to the second lip skin. The second mount is removably attached to the first mount. The second electric heater is disposed at the second side of the second lip segment and integrated with the second lip skin.

According to another aspect of the present disclosure, another assembly is provided for an aircraft propulsion system. This assembly includes a nacelle inlet lip. The nacelle inlet lip includes a first lip segment and a second lip segment. The first lip segment includes a polymer first lip skin, a polymer first mount and a first electric heater. The polymer first lip skin extends circumferentially about an axis. The polymer first mount is bonded to the polymer first lip skin. The first electric heater is integrated with the polymer first lip skin and circumferentially overlaps the polymer first mount. The second lip segment includes a polymer second lip skin, a polymer second mount and a second electric heater. The polymer second lip skin extends circumferentially about the axis. The polymer second mount is bonded to the polymer second lip skin. The polymer second mount is circumferentially adjacent and attached to the polymer first mount. The second electric heater is integrated with the polymer second lip skin and circumferentially overlaps the polymer second mount.

According to still another aspect of the present disclosure, another assembly is provided for an aircraft propulsion system. This assembly includes a nacelle inlet lip. The nacelle inlet lip includes a first lip segment and a second lip segment. The first lip segment includes a first polymeric material, a first lip skin, a first mount and a first electric heater. The first lip skin extends circumferentially about an axis to a first side of the first lip segment. The first mount is disposed at the first side of the first lip segment and is connected to the first lip skin. The first electric heater is integrated with the first lip skin. The second lip segment includes a second polymeric material, a second lip skin, a second mount and a second electric heater. The second lip skin extends circumferentially about the axis to a second side of the second lip segment. The second mount is disposed at the second side of the second lip segment and is connected to the second lip skin. The second mount is mechanically fastened to the first mount. The second electric heater is integrated with the second lip skin. The first electric heater is separated from the second electric heater by an inter-element distance. The first mount has a first mount width. The second mount has a second mount width. The inter-element distance is less than at least one of the first mount width or the second mount width.

The following optional features may be applied to any of the above aspects.

The first electric heater may be disposed adjacent the first side of the first lip segment. In addition or alternatively, the second electric heater may be disposed adjacent the second side of the second lip segment.

The polymer first lip skin may extend circumferentially about the axis to a first side of the first lip segment. The polymer first mount and the first electric heater may be disposed adjacent the first side of the first lip segment. In addition or alternatively, the polymer second lip skin may extend circumferentially about the axis to a second side of the second lip segment. The polymer second mount and the second electric heater may be disposed adjacent the second side of the second lip segment.

The first electric heater may be embedded within a first thermoplastic material of the polymer first lip skin. In addition or alternatively, the second electric heater may be embedded within a second thermoplastic material of the polymer second lip skin.

The first polymeric material may be or otherwise include a first thermoplastic material. In addition or alternatively, the second polymeric material may be or otherwise include a second thermoplastic material.

The first polymeric material may include a first polymer matrix and first fiber-reinforcement embedded within the first polymer matrix. In addition or alternatively, the second polymeric material may include a second polymer matrix and second fiber-reinforcement embedded within the second polymer matrix.

The first electric heater may be embedded within the first polymeric material. In addition or alternatively, the second electric heater may be embedded within the second polymeric material.

The first electric heater may circumferentially overlap the first mount. In addition or alternatively, the second electric heater may circumferentially overlap the second mount.

The first electric heater may be circumferentially adjacent and extend longitudinally along the first side of the first lip segment. In addition or alternatively, the second electric heater may be circumferentially adjacent and extend longitudinally along the second side of the second lip segment.

The first electric heater may extend circumferentially to the first side of the first lip segment. In addition or alternatively, the second electric heater may extend circumferentially to the second side of the second lip segment.

The first electric heater may be separated from the second electric heater by an inter-element distance. The first mount may have a first mount width circumferentially about the axis. The second mount may have a second mount width circumferentially about the axis. The inter-element distance may be less than the first mount width and/or the second mount width.

The first electric heater may be separated from the second electric heater by an inter-element distance. The first lip skin may be separated from the second lip skin by an inter-skin distance. The inter-element distance may be equal to or less than five times the inter-skin distance.

The first lip skin and the first mount may each be or otherwise include the first polymeric material. In addition or alternatively, the second lip skin and the second mount may each be or otherwise include the second polymeric material.

The first mount may be bonded to the first lip skin. In addition or alternatively, the second mount may be bonded to the second lip skin.

The first mount may be configured as or otherwise include a first flange disposed at the first side of the first lip segment. The second mount may be configured as or otherwise include a second flange disposed at the second side of the second lip segment. The second flange may be abutted circumferentially against the first flange. The second flange may be mechanically fastened to the first flange.

The first electric heater may be configured as or otherwise include a first carbon nanotube heater. In addition or alternatively, the second electric heater may be configured as or otherwise include a second carbon nanotube heater.

The nacelle inlet lip may include an inner lip portion, an outer lip portion and an internal channel extending radially between the inner lip portion and the outer lip portion. The first lip skin and the second lip skin may each form a respective section of the inner lip portion and a respective section of the outer lip portion.

The nacelle inlet lip may be configured to form an opening into the aircraft propulsion system.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a side illustration of an aircraft propulsion system with a pylon.
FIG. 2 is a partial sectional illustration of the propulsion system at a nacelle inlet structure with an electric thermal anti-icing system.
FIG. 3 is an end view illustration of an inlet lip of the inlet structure.
FIG. 4 is a partial sectional illustration of the anti-icing system and the inlet lip taken along line 4-4 in FIG. 5.
FIG. 5 is a partial cross-sectional illustration of the anti-icing system and the inlet lip taken along line 5-5 in FIG. 4.
FIGS. 6A-C are partial schematic sectional illustrations of the inlet lip with various different layer configurations.
FIGS. 7A and 7B are partial schematic illustrations of an electric heater with various heating element arrangements.
FIG. 8 is a partial cross-sectional illustration of the inlet lip at a mount.
FIG. 9 is a partial cross-sectional illustration of the inlet lip at a seam between circumferentially neighboring inlet lip segments.

### DETAILED DESCRIPTION

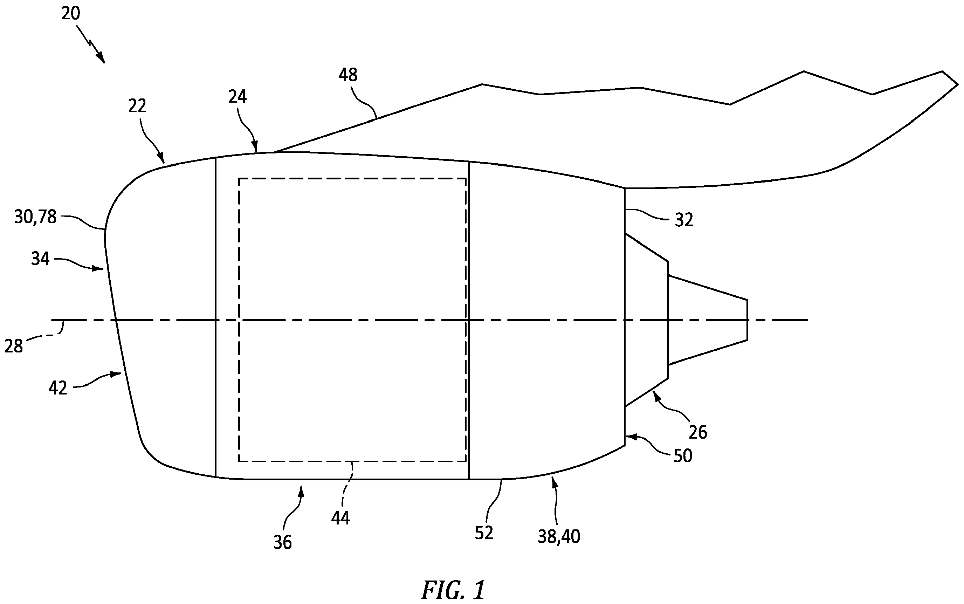

FIG. 1 illustrates an aircraft propulsion system 20 for an aircraft such as, but not limited to, a commercial airliner or a cargo plane. The aircraft propulsion system 20 includes a nacelle 22 and a gas turbine engine. This gas turbine engine may be configured as a high-bypass turbofan engine. Alternatively, the gas turbine engine may be configured as a turbojet engine or any other type of gas turbine engine capable of propelling the aircraft during flight.

The nacelle 22 is configured to house and provide an aerodynamic cover for the gas turbine engine. The nacelle 22 of FIG. 1, for example, includes a nacelle outer structure 24 and a nacelle inner structure 26; e.g., an inner fixed structure (IFS).

The outer structure 24 extends axially along an axial centerline 28 between an upstream, forward end 30 of the outer structure 24 and a downstream, aft end 32 of the outer structure 24. Briefly, the axial centerline 28 may be a centerline axis of the nacelle 22 and/or the gas turbine engine, and/or a rotational axis for one or more rotating components (e.g., spools) of the gas turbine engine. The outer structure 24 of FIG. 1 includes a nacelle inlet structure 34, one or more nacelle fan cowls 36 (one cowl visible in FIG. 1) and a nacelle aft structure 38, which may be configured as part of or include a thrust reverser system 40. However, in other embodiments, the aircraft propulsion system 20 may be configured without the thrust reverser system 40.

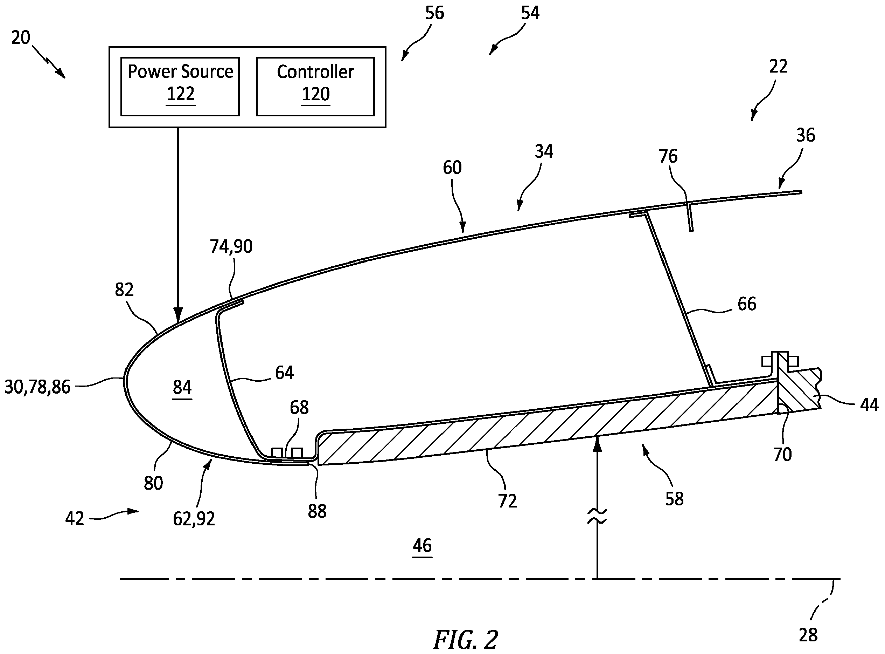

The inlet structure 34 is disposed at the nacelle forward end 30. The inlet structure 34 is configured to direct a stream of air through an inlet opening 42 (see also FIG. 2) at the nacelle forward end 30 into the aircraft propulsion system 20 and towards a fan section of the gas turbine engine.

The fan cowls 36 are disposed axially between the inlet structure 34 and the aft structure 38. Each fan cowl 36 of FIG. 1, in particular, is disposed at an aft end of a stationary portion of the nacelle 22, and each fan cowl 36 extends forward to the inlet structure 34. Each fan cowl 36 is generally axially aligned with the fan section of the gas turbine engine. The fan cowls 36 are configured to provide an aerodynamic covering for a fan case 44, which fan case 44 circumscribes a fan rotor within the fan section and may partially form an outer peripheral boundary of a flowpath 46 (see FIG. 2) of the aircraft propulsion system 20.

The term "stationary portion" is used above to describe a portion of the nacelle 22 that is stationary during propulsion system operation (e.g., during aircraft takeoff, aircraft flight and aircraft landing). However, the stationary portion may be otherwise movable for inspection / maintenance of the aircraft propulsion system 20; e.g., when the aircraft propulsion system 20 is non-operational. Each of the fan cowls 36, for example, may be configured to provide access to components of the gas turbine engine such as the fan case 44 and/or peripheral equipment arranged with the fan case 44 for inspection, maintenance and/or otherwise. In particular, each of the fan cowls 36 may be pivotally mounted with the aircraft propulsion system 20 (e.g., to a pylon structure 48) by, for example, a pivoting hinge system. The present disclosure, however, is not limited to the foregoing fan cowl configurations and/or access schemes.

The aft structure 38 of FIG. 1 is disposed at the nacelle aft end 32. The aft structure 38 is configured to form a bypass exhaust 50 for a bypass flowpath with the inner structure 26. The aft structure 38 may include one or more translating sleeves 52 (one sleeve visible in FIG. 1) for the thrust reverser system 40. The present disclosure, however, is not limited to such a translating sleeve thrust reverser system.

FIG. 2 illustrates an assembly 54 for the aircraft propulsion system 20. This propulsion system assembly 54 includes the inlet structure 34, the fan cowls 36 (one cowl visible in FIG. 2) and the fan case 44. The propulsion system assembly 54 also includes an electric thermal anti-icing system 56.

The inlet structure 34 of FIG. 2 includes a tubular inner barrel 58, a tubular outer barrel 60, an annular inlet lip 62 (e.g., a nose lip) and one or more components of the anti-icing system 56. The inlet structure 34 may also include one or more annular bulkheads 64 and 66.

The inner barrel 58 extends circumferentially around the axial centerline 28. The inner barrel 58 extends axially along the axial centerline 28 between a forward end 68 of the inner barrel 58 and an aft end 70 of the inner barrel 58. The inner barrel 58 may be configured to attenuate sound (e.g., noise) generated during operation of the aircraft propulsion system 20 and, more particularly for example, sound generated by rotation of the fan rotor within the fan section. The inner barrel 58 of FIG. 2, for example, includes at least one tubular acoustic panel 72 or an array of arcuate acoustic panels 72 arranged around the axial centerline 28. Each acoustic panel 72 may include a porous (e.g., honeycomb) core bonded to and radially between a perforated face sheet and a non-perforated back sheet, where the perforated face sheet faces radially inward and provides an outer peripheral boundary for an axial portion of the flowpath 46. Of course, various other acoustic panel types and configurations are known in the art, and the present disclosure is not limited to any particular ones thereof.

The outer barrel 60 extends circumferentially around the axial centerline 28. The outer barrel 60 extends axially along the axial centerline 28 between a forward end 74 of the outer barrel 60 and an aft end 76 of the outer barrel 60. The outer barrel 60 is spaced radially outboard of and axially overlaps the inner barrel 58. The outer barrel 60 thereby circumscribes the inner barrel 58.

The inlet lip 62 forms a leading edge 78 of the nacelle 22 as well as the inlet opening 42 into the aircraft propulsion system 20 (see FIG. 1), where the leading edge 78 is located at the nacelle forward end 30. The inlet lip 62 has a cupped (e.g., generally U-shaped or V-shaped or J-shaped) cross-sectional geometry which extends circumferentially around the axial centerline 28. The inlet lip 62 includes an inner lip portion 80, an outer lip portion 82 and an internal channel 84. This internal channel 84 extends axially within the inlet lip 62 between and to (a) the forward bulkhead 64 and (b) the inner lip portion 80 and the outer lip portion 82. The internal channel 84 extends radially within the inlet lip 62 between and to the inner lip portion 80 and the outer lip portion 82.

The inner lip portion 80 extends circumferentially around the axial centerline 28. The inner lip portion 80 extends axially from an intersection 86 with the outer lip portion 82 at the leading edge 78 to the inner barrel 58. At an aft end 88 of the inner lip portion 80, the inlet lip 62 and its inner lip portion 80 may be (e.g., directly or indirectly) attached to the inner barrel 58 and/or the forward bulkhead 64. The inner lip portion 80 of FIG. 2, for example, is mechanically fastened to the inner barrel 58 and the forward bulkhead 64 with one or more fasteners; e.g., rivets, bolts, etc. The present disclosure, however, is not limited to any particular attachment techniques between the inlet structure components.

The outer lip portion 82 extends circumferentially around the axial centerline 28. The outer lip portion 82 extends axially from the intersection 86 with the inner lip portion 80 to the outer barrel 60. As the outer lip portion 82 extends axially towards the outer barrel 60 and to an aft end 90 of the outer lip portion 82, the outer lip portion 82 axially overlaps and diverges radially away from (in a radial outward direction away from the axial centerline 28) the inner lip portion 80. The outer lip portion 82 thereby circumscribes the inner lip portion 80 and the internal channel 84. At the aft end 90 of the outer lip portion 82, the inlet lip 62 and its outer lip portion 82 may be (e.g., directly or indirectly) attached to the outer barrel 60 and/or the forward bulkhead 64. Both the outer lip portion 82 and the outer barrel 60 of FIG. 2, for example, are attached to the forward bulkhead 64, which forward bulkhead 64 ties the outer lip portion 82 and the outer barrel 60 together. The outer lip portion 82 and/or the outer barrel 60 may be attached to the forward bulkhead 64 with one or more fasteners; e.g., rivets, bolts, etc. Alternatively, the outer lip portion 82 and/or the outer barrel 60 may be bonded (e.g., welded, adhered, etc.) to the forward bulkhead 64. The present disclosure, however, is not limited to any particular attachment techniques between the inlet structure component(s) 60 and/or 82 and the forward bulkhead 64. Moreover, while the inlet lip 62 and its outer lip portion 82 may be formed discrete from the outer barrel 60, part or all of the outer barrel 60 may alternatively be formed integral with the inlet lip 62 and its outer lip portion 82. Part or all of the outer barrel 60, for example, may be formed as an extension of the outer lip portion 82.

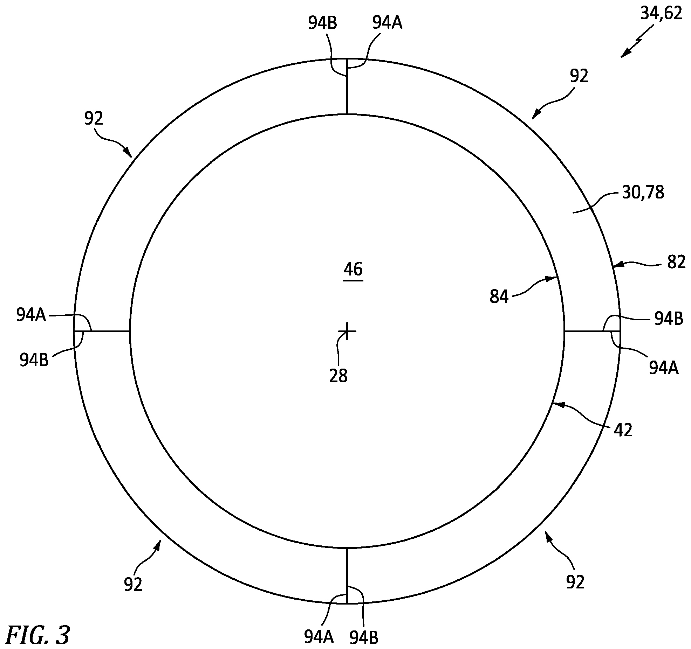

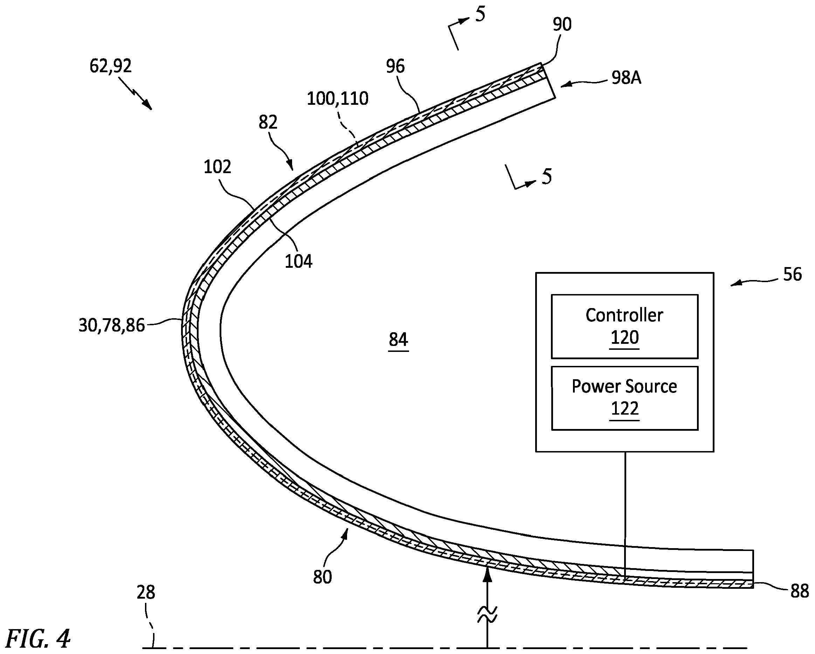

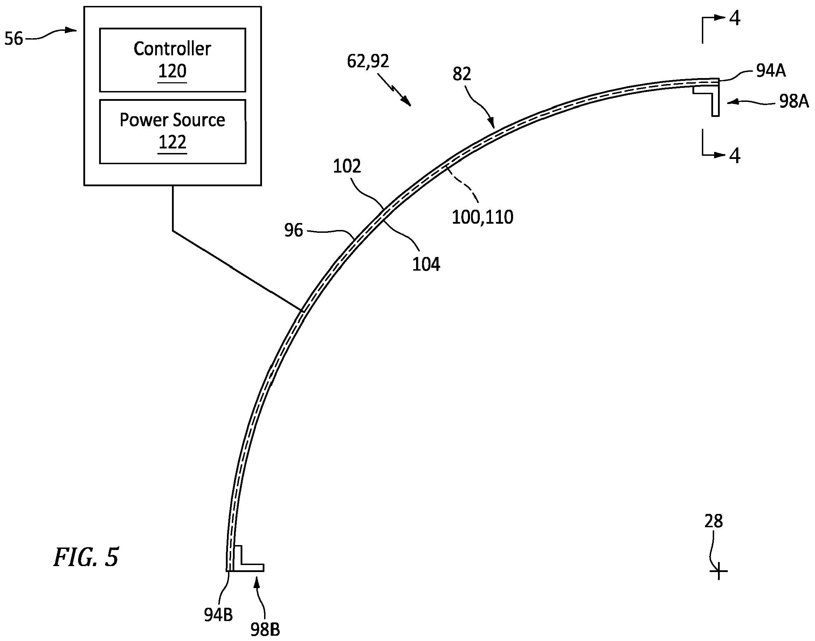

The inlet lip 62 of FIG. 3 is configured as a circumferentially segmented structure. The inlet lip 62 of FIG. 3, for example, includes a plurality of discrete circumferential inlet lip segments 92. Note, while the inlet lip 62 of the FIG. 3 is shown with four (4) of the inlet lip segments 92, the inlet lip 62 may alternatively include less than or more than four (4) of the inlet lip 62 in other embodiments; e.g., two (2) or three (3) of the inlet lip segments 92, five (5) or six (6) of the inlet lip segments 92, etc. Each of these lip segments 92 may form an entire circumferential section of the inlet lip 62 and its inner lip portion 80 and its outer lip portion 82. Each lip segment 92 of FIG. 3 extends circumferentially about the axial centerline 28 between and to opposing circumferential sides 94A and 94B (generally referred to as "94") of the respective lip segment 92. Referring to FIGS. 4 and 5, each lip segment 92 includes a lip skin 96 and one or more mounts 98A and 98B (generally referred to as "98"). Each lip segment 92 of FIGS. 4 and 5 is also configured with at least one electric heater 100, where the electric heater 100 is integrated with (e.g., into) the lip skin 96.

The lip skin 96 of FIG. 4 extends longitudinally from the aft end 88 of the inner lip portion 80 to the aft end 90 of the outer lip portion 82. The lip skin 96 of FIG. 5 extends circumferentially about the axial centerline 28 between and to the opposing circumferential lip segment sides 94A and 94B. The lip skin 96 of FIGS. 4 and 5 has a thickness which extends between and to an exterior surface 102 of the lip segment 92 and its lip skin 96 and an interior surface 104 of the lip skin 96. With this configuration, the lip skin 96 of FIGS. 4 and 5 forms respective circumferential sections of the inner lip portion 80 and the outer lip portion 82.

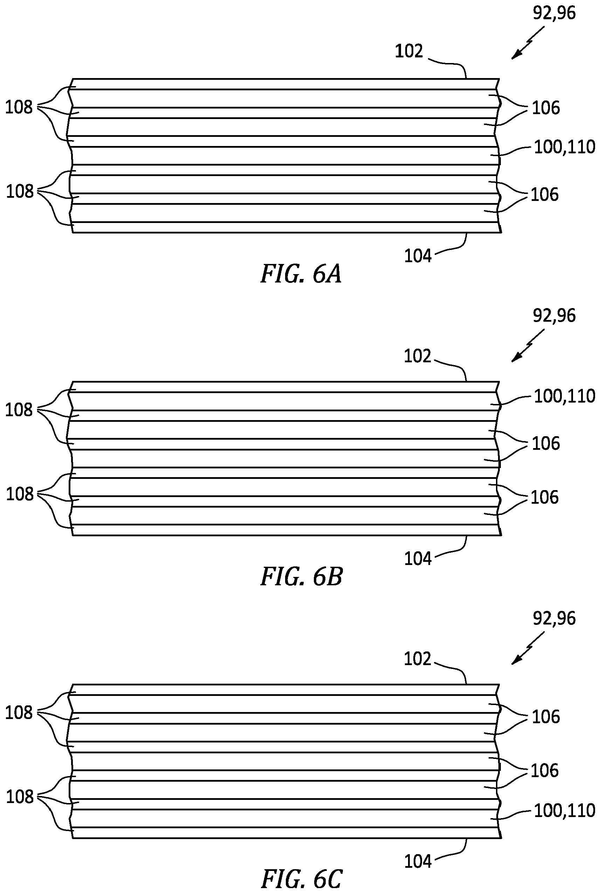

The lip skin 96 is formed from a polymeric material. This polymeric material may be or otherwise include a thermoplastic material. The lip skin 96 of FIGS. 6A-6C, for example, includes fiber-reinforcement 106 within a thermoplastic matrix 108, or more generally a polymeric matrix. The lip skin 96 of FIGS. 6A-C also includes the electric heater 100. Here, the fiber-reinforcement 106 and the electric heater 100 of FIGS. 6A-C are embedded within the thermoplastic matrix 108, where the lip skin elements 100, 106 and 108 collectively form the lip skin 96.

The fiber-reinforcement 106 may be arranged into the one or more reinforcement layers. Each layer of the fiber-reinforcement 106 includes one or more long strand fibers, short strand fibers and/or chopped fibers. Prior to consolidation of the lip skin 96, the fibers in each reinforcement layer may be woven into a weave or otherwise arranged together to provide a fiber-reinforcement cloth or mat. Examples of the fiber-reinforcement 106 include, but are not limited to, fiberglass material, carbon fiber material and aramid (e.g., Kevlar^{®}) material.

The thermoplastic material provides the thermoplastic matrix 108 into which the fiber-reinforcement 106 and the electric heater 100 are disposed; e.g., embedded, encapsulated, etc. Examples of the thermoplastic material include, but are not limited to, polyether ether ketone (PEEK), polyetherimide (PEI), and (polyphenylene sulfide (PTS).

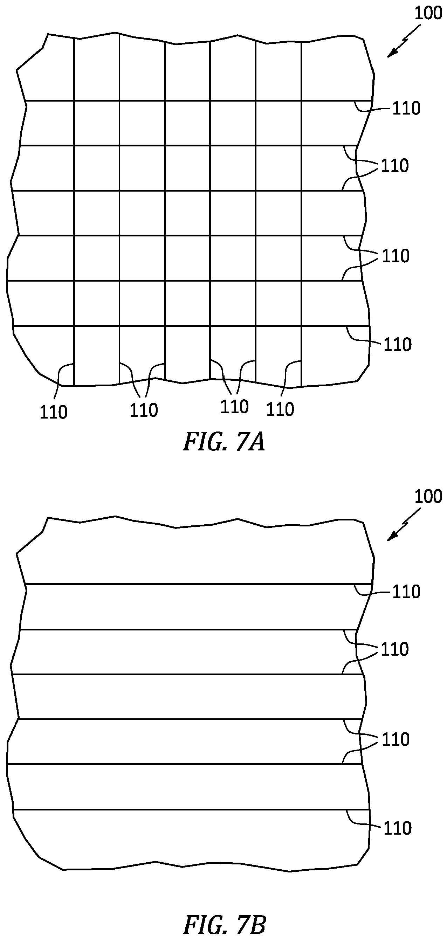

Referring to FIGS. 7A and 7B, the electric heater 100 includes one or more electric heating elements 110 arranged in a grid (e.g., see FIG. 7A), an array (e.g., see FIG. 7B) or any other arrangement. The heating elements 110 may be electrically interconnected to provide a single heating zone across / along the lip skin 96 (see FIGS. 4 and 5). Alternatively, the heating elements 110 may be configured to provide multiple discrete heating zones across / along the lip skin 96. Each of the heating elements 110 may be configured as an electric carbon nanotube heater. One or more or all of the heating elements 110, however, may alternatively be configured as another type of electrically resistive heating element such as a resistive metal heating wire.

Referring to FIGS. 6A-C, the electric heater 100 and its heating elements 110 are thermally coupled with the lip segment exterior surface 102 through at least the thermoplastic matrix 108. Referring to FIG. 6A, the electric heater 100 and its heating elements 110 may be arranged (e.g., sandwiched) laterally between multiple layers of the fiber-reinforcement 106 and/or the thermoplastic matrix 108. The electric heater 100 may thereby be disposed intermediately (e.g., midway) between the lip skin interior surface 104 and the lip segment exterior surface 102. Alternatively, referring to FIG. 6B, the electric heater 100 and its heating elements 110 may be arranged adjacent (or otherwise at) the lip segment exterior surface 102. Still alternatively, referring to FIG. 6C, the electric heater 100 and its heating elements 110 may be arranged adjacent (or otherwise at) the lip skin interior surface 104. The heating elements 110, of course, may also be located at multiple different lateral locations within the lip skin 96 between the lip skin interior surface 104 and the lip segment exterior surface 102 to provide a multi-layer heater arrangement.

Referring to FIG. 4, the electric heater 100 extends longitudinally within / along the lip skin 96. The electric heater 100 of FIG. 4, for example, extends longitudinally (e.g., uninterrupted) along at least a portion of or an entirety of the lip segment 92 between the aft end 88 of the inner lip portion 80 and the aft end 90 of the outer lip portion 82. The electric heater 100 and its heating elements 110 may thereby heat the lip skin 96 at the leading edge 78 as well as longitudinally along at least a portion or an entirety of the inner lip portion 80 and/or the outer lip portion 82. Referring to FIG. 5, the electric heater 100 also extends circumferentially within / along the lip skin 96. The electric heater 100 of FIG. 5, for example, extends circumferentially (e.g., uninterrupted) about the axial centerline 28 between the opposing circumferential lip segment sides 94A and 94B. The electric heater 100 and its heating elements 110 may thereby heat the lip skin 96 circumferentially along an entirety of the respective lip segment 92, including at and along the circumferential lip segment sides 94A and 94B. More particularly, the electric heater 100 and its elements of FIG. 5 are arranged at (e.g., on, adjacent, etc.) each circumferential lip segment side 94A, 94B, and extend circumferentially therebetween.

The mounts 98A and 98B are respectively arranged at the circumferential lip segment sides 94A and 94B. Referring to FIG. 4, each mount 98 may extend longitudinally along at least a portion of or an entirety of the lip segment 92 and its lip skin 96 between the aft end 88 of the inner lip portion 80 and the aft end 90 of the outer lip portion 82. However, it is contemplated each mount 98 may be replaced with multiple mounts 98 disposed at discrete locations along the longitudinal length of the lip segment 92 and its lip skin 96. Referring to FIG. 5, each mount 98 is disposed within the internal channel 84 at the lip skin interior surface 104. Each mount 98 is connected to the lip skin 96. Each mount 98 of FIGS. 4 and 5, for example, is welded, adhered or otherwise bonded to the lip skin 96. However, it is contemplated one or more of the mounts 98 may alternatively be formed integral with the lip skin 96; e.g., in a single formation process.

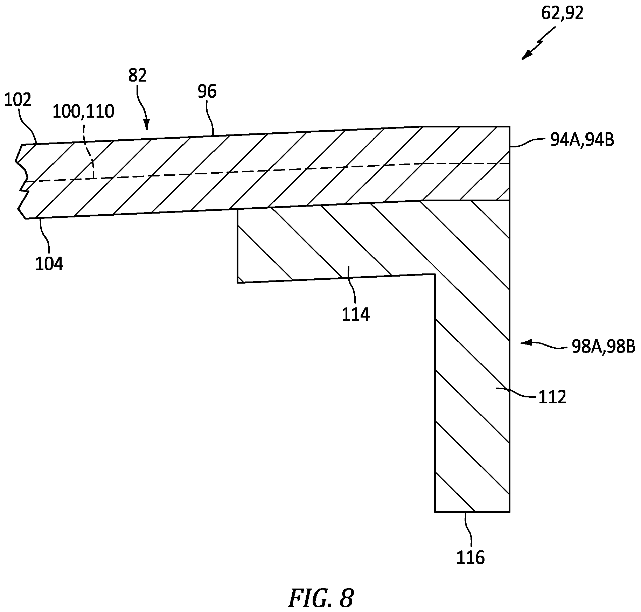

Referring to FIG. 8, the mount 98 may include a mount flange 112 (e.g., an elongated tab, a rim, etc.) and a mount base 114. The base 114 extends longitudinally and circumferentially along the lip skin 96 and its lip skin interior surface 104. This base 114 is also connected (e.g., bonded) to the lip skin 96. The flange 112 is disposed at a respective one of the circumferential lip segment sides 94. This flange 112 projects out from the base 114 (in a direction away from the lip skin 96 and its lip skin interior surface 104) to a distal end 116 of the respective mount 98 and its flange 112. The flange 112 extends circumferentially along the base 114 and the lip skin 96 at the respective circumferential lip segment side 94.

Each mount 98 may be formed from a polymeric material. This polymeric material may be or otherwise include a thermoplastic material. Each mount 98, for example, includes fiber-reinforcement within a thermoplastic matrix, or more generally a polymeric matrix. The fiber-reinforcement may be the same as or different than the fiber-reinforcement in the lip skin 96. The thermoplastic material of the thermoplastic matrix may be the same as or different than the thermoplastic material / the thermoplastic matrix in the lip skin 96. With such a construction, the mounts 98 may be bonded to the lip skin 96 using various thermoplastic welding processes such as, but not limited to, an induction welding process or a vibration welding process. By bonding each mount 98 to the lip skin 96, the attachment of that mount 98 to the lip skin 96 may not affect the heater at / along the respective circumferential lip segment side 94. The electric heater 100 and its heating elements 110 of FIG. 8, in particular, may circumferentially and longitudinally overlap (e.g., an entirety of) each mount 98 at and along the respective circumferential lip segment side 94. Moreover, the electric heater 100 and its heating elements 110 do not need to be rearranged or otherwise adjusted to accommodate attachment of the mounts 98 at the circumferential lip segment side 94. By contrast, where a mount is mechanically fastened to a lip skin with fasteners such as rivets or bolts, those fasteners may break continuity of an electric heating element or may require "dead" regions without electric heating elements and, thus, without heating.

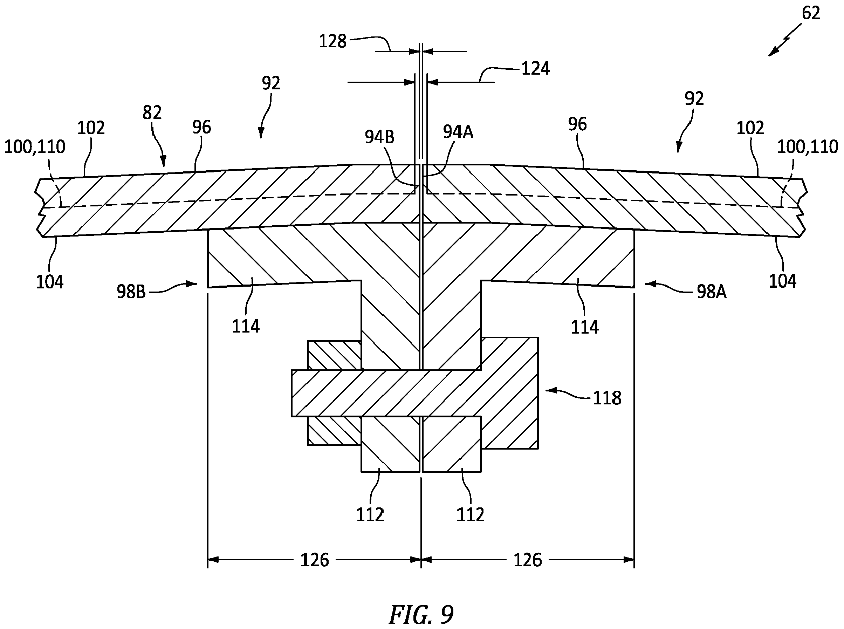

Referring to FIG. 3, the lip segments 92 are arranged circumferentially about the axial centerline 28 in an annular array; e.g., a circular or oval array. Each of these lip segments 92 is removably attached to each circumferentially adjacent lip segment 92. For example, referring to FIG. 9, the flange 112 of each mount 98 is arranged circumferentially next to (e.g., adjacent) and may circumferentially engage (e.g., abut against) the flange 112 of another mount 98. These flanges 112 may be attached to one another with one or more fasteners 118 (e.g., bolts) arranged along the longitudinal length of the respective flanges 112. With this arrangement, the lip segments 92 may be individually installed, removed and/or replaced as needed. For example, if one of the lip segments 92 is damaged by a foreign object (e.g., foreign object damage (FOD)) such as a bird during aircraft flight, that damaged lip segment 92 may be readily replaced without requiring replacement of the entire inlet lip 62 or significant aircraft downtime.

Referring to FIGS. 4 and 5, the anti-icing system 56 includes the electric heater 100 that is part of / integrated with each lip segment 92. The anti-icing system 56 also includes a controller 120 and an electrical power source 122; e.g., one or more batteries, an electric generator, etc. This anti-icing system 56 is configured to melt and/or prevent ice accumulation on each lip segment exterior surface 102, for example, at, along and near the leading edge 78. The controller 120, for example, may signal the power source 122 (or a switch and/or other regulator between the power source 122 and each electric heater 100) to provide electricity to each electric heater 100. The electricity energizers each electric heater 100 and its heating elements 110, and each electric heater 100 generates heat energy. Referring to FIGS. 6A-C, the heat energy transfers (e.g., conducts) through at least the thermoplastic material towards (e.g., to) the respective lip segment exterior surface 102 thereby heating that lip segment exterior surface 102 to an elevated temperature.

The elevated temperature may be selected to be warm enough to melt any ice accumulating on the respective lip segment exterior surface 102 and/or prevent accumulation of the ice on the respective lip segment exterior surface 102, while cool enough so as not to damage the respective lip segment 92 or any surrounding components and/or needlessly expend energy. In particular, the elevated temperature is selected to be less than a melting temperature of the thermoplastic material as well as less than a softening temperature of the thermoplastic material. The term "softening" may describe a temperature at which a thermoplastic material becomes soft and permanently deformable; e.g., pliable, malleable, manipulatable, etc. For example, when the thermoplastic material is heated to a temperature above its softening temperature (but below its melting temperature), the thermoplastic material may be soft enough to lose its previous shape due to gravitational sagging and/or other forces. By contrast, when the thermoplastic material is heated to a temperature below its softening temperature, the thermoplastic material may remain stiff and retain its form.

In some embodiments, referring to FIG. 9, two circumferentially neighboring (e.g., adjacent) electric heaters 100 and their heating elements 110 are circumferentially separated from one another by an inter-heater / inter-element distance 124 at a seam between respective circumferentially neighboring (e.g., adjacent) lip segments 92. This distance 124 may be sized smaller than a width 126 (measured in a circumferential direction about the axial centerline 28) of each respective mount 98 (e.g., a width of the base 114 or a width of the flange 112) at the seam. The distance 124 may also be sized equal to or less than five times (5x) a circumferential width 128 of any gap between the respective lip skins 96 at the seam. Here, the gap width 128 is measured as an inter-skin distance between the respective lip skins 96 at the seam. In other words, the electric heaters 100 are substantially right next to one another at each seam. The present disclosure, however, is not limited to the foregoing exemplary dimensional relationships.

In some embodiments, referring to FIGS. 6A-C, the polymeric material of the lip skin 96 may define (e.g., all of) the exterior surface 102 of the lip segment 92 and its lip skin 96. In other embodiments, the lip skin 96 may be provided with a protective (e.g., erosion) coating or layer over the polymeric material to define at least a portion or all of the exterior surface 102 of the lip segment 92 and its lip skin 96.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An assembly (54) for an aircraft propulsion system (20), comprising:
a nacelle inlet lip (62) including a first lip segment (92) and a second lip segment (92);
the first lip segment (92) including a first polymeric material, a first lip skin (96), a first mount (98A) and a first electric heater (100), the first lip skin (96) extending circumferentially in a first direction about an axis (28) to a first side (94A) of the first lip segment (92), the first mount (98A) disposed at the first side (94A) of the first lip segment (92) and connected to the first lip skin (96), and the first electric heater (100) disposed at the first side (94A) of the first lip segment (92) and integrated with the first lip skin (96); and
the second lip segment (92) including a second polymeric material, a second lip skin (96), a second mount (98B) and a second electric heater (100), the second lip skin (96) extending circumferentially in a second direction about the axis (28) to a second side (94B) of the second lip segment (92), the second mount (98B) disposed at the second side (94B) of the second lip segment (92) and connected to the second lip skin (96), the second mount (98B) removably attached to the first mount (98A), and the second electric heater (100) disposed at the second side (94B) of the second lip segment (92) and integrated with the second lip skin (96).

2. The assembly (54) of claim 1, wherein at least one of:
the first polymeric material comprises a first thermoplastic material; and/or
the second polymeric material comprises a second thermoplastic material.

3. The assembly (54) of claim 1 or 2, wherein at least one of:
the first polymeric material comprises a first polymer matrix (108) and first fiber-reinforcement (106) embedded within the first polymer matrix (108); and/or
the second polymeric material comprises a second polymer matrix (108) and second fiber-reinforcement (106) embedded within the second polymer matrix (108).

4. The assembly (54) of claim 1, 2 or 3, wherein at least one of:
the first electric heater (100) is embedded within the first polymeric material; and/or
the second electric heater (100) is embedded within the second polymeric material.

5. The assembly (54) of any preceding claim, wherein at least one of:
the first electric heater (100) circumferentially overlaps the first mount (98A); and/or
the second electric heater (100) circumferentially overlaps the second mount (98B).

6. The assembly (54) of any preceding claim, wherein at least one of:
the first electric heater (100) is circumferentially adjacent and extends longitudinally along the first side (94A) of the first lip segment (92); and/or
the second electric heater (100) is circumferentially adjacent and extends longitudinally along the second side (94B) of the second lip segment (92).

7. The assembly (54) of any preceding claim, wherein at least one of:
the first electric heater (100) extends circumferentially to the first side (94A) of the first lip segment (92); and/or
the second electric heater (100) extends circumferentially to the second side (94B) of the second lip segment (92).

8. The assembly (54) of any preceding claim, wherein:
the first electric heater (100) is separated from the second electric heater (100) by an inter-element distance (124);
the first mount (98A) has a first mount width (126) circumferentially about the axis (28);
the second mount (98B) has a second mount width (126) circumferentially about the axis (28); and
the inter-element distance (124) is less than at least one of the first mount width (126) or the second mount width (126).

9. The assembly (54) of any preceding claim, wherein:
the first electric heater (100) is separated from the second electric heater (100) by an inter-element distance (124);
the first lip skin (96) is separated from the second lip skin (96) by an inter-skin distance (128); and
the inter-element distance (124) is equal to or less than five times the inter-skin distance (128).

10. The assembly (54) of any preceding claim, wherein at least one of:
the first lip skin (96) and the first mount (98A) each comprise the first polymeric material; and/or
the second lip skin (96) and the second mount (98B) each comprises the second polymeric material; and/or
the first mount (98A) is bonded to the first lip skin (96); and/or
the second mount (98B) is bonded to the second lip skin (96).

11. The assembly (54) of any preceding claim, wherein:
the first mount (98A) comprises a first flange (112) disposed at the first side (94A) of the first lip segment (92);
the second mount (98B) comprises a second flange (112) disposed at the second side (94B) of the second lip segment (92); and
the second flange (112) is abutted circumferentially against the first flange (112), and the second flange (112) is mechanically fastened to the first flange (112).

12. The assembly (54) of any preceding claim, wherein at least one of:
the first electric heater (100) comprises a first carbon nanotube heater; and/or
the second electric heater (100) comprises a second carbon nanotube heater.

13. The assembly (54) of any preceding claim, wherein:
the nacelle inlet lip (62) includes an inner lip portion (80), an outer lip portion (82) and an internal channel (84) extending radially between the inner lip portion (80) and the outer lip portion (82), and the first lip skin (96) and the second lip skin (96) each form a respective section of the inner lip portion (80) and a respective section of the outer lip portion (82); and/or
the nacelle inlet lip (62) is configured to form an opening into the aircraft propulsion system (20).

14. An assembly (54) for an aircraft propulsion system (20), comprising:
a nacelle inlet lip (62) including a first lip segment (92) and a second lip segment (92);
the first lip segment (92) including a polymer first lip skin (96), a polymer first mount (98A) and a first electric heater (100), the polymer first lip skin (96) extending circumferentially about an axis (28), the polymer first mount (98A) bonded to the polymer first lip skin (96), and the first electric heater (100) integrated with the polymer first lip skin (96) and circumferentially overlapping the polymer first mount (98A); and
the second lip segment (92) including a polymer second lip skin (96), a polymer second mount (98B) and a second electric heater (100), the polymer second lip skin (96) extending circumferentially about the axis (28), the polymer second mount (98B) bonded to the polymer second lip skin (96), the polymer second mount (98B) circumferentially adjacent and attached to the polymer first mount (98A), and the second electric heater (100) integrated with the polymer second lip skin (96) and circumferentially overlapping the polymer second mount (98B),
wherein, optionally, at least one of:
the polymer first lip skin (96) extends circumferentially about the axis (28) to a first side (94A) of the first lip segment (92), and the polymer first mount (98A) and the first electric heater (100) are disposed adjacent the first side (94A) of the first lip segment (92); and/or
the polymer second lip skin (96) extends circumferentially about the axis (28) to a second side (94B) of the second lip segment (92), and the polymer second mount (98B) and the second electric heater (100) are disposed adjacent the second side (94B) of the second lip segment (92); and/or
the first electric heater (100) is embedded within a first thermoplastic material of the polymer first lip skin (96); and/or
the second electric heater (100) is embedded within a second thermoplastic material of the polymer second lip skin (96).

15. An assembly (54) for an aircraft propulsion system (20), comprising:
a nacelle inlet lip (62) including a first lip segment (92) and a second lip segment (92);
the first lip segment (92) including a first polymeric material, a first lip skin (96), a first mount (98A) and a first electric heater (100), the first lip skin (96) extending circumferentially about an axis (28) to a first side of the first lip segment (92), the first mount (98A) disposed at the first side (94A) of the first lip segment (92) and connected to the first lip skin (96), and the first electric heater (100) integrated with the first lip skin (96);
the second lip segment (92) including a second polymeric material, a second lip skin (96), a second mount (98B) and a second electric heater (100), the second lip skin (96) extending circumferentially about the axis (28) to a second side (94B) of the second lip segment (92), the second mount (98B) disposed at the second side (94B) of the second lip segment (92) and connected to the second lip skin (96), the second mount (98B) mechanically fastened to the first mount (98A), and the second electric heater (100) integrated with the second lip skin (96); and
the first electric heater (100) separated from the second electric heater (100) by an inter-element distance (124), the first mount (98A) having a first mount width (126), the second mount (98B) having a second mount width (126), and the inter-element distance (124) less than at least one of the first mount width (126) or the second mount width (126),
wherein, optionally, at least one of:
the first electric heater (100) is disposed adjacent the first side (94A) of the first lip segment (92); and/or
the second electric heater (100) is disposed adjacent the second side (94B) of the second lip segment (92).
